# EUROPEAN PATENT APPLICATION

(11) **EP 4 324 863 A1**
(43) Date of publication of application: **21.02.2024**
(21) Application number: 23186005.7
(22) Date of filing: 18.07.2023
(51) Int. Cl.: C08F 290/06, C09J 4/00, C09J 4/06, C08K 3/24

(54) **SYNTHETIC ADHESIVE COMPOSITIONS WITH IMPROVED ADHESION PARTICULARLY ON POLYAMIDE SUBSTRATES**

(30) Priority: 19.07.2022 IT 202200015099
(71) Applicant: Permabond Engineering Adhesives Ltd, Eastleigh Hampshire SO50 9PD (GB)
(72) Inventor: Monesi, Alessio, 21041 Albizzate (VA) (IT); Zaffaroni, Giorgio, 28019 Suno (NO) (IT)
(74) Representative: Rastelli, Franco

(57) **Abstract**

The present invention relates to the composition of adhesives exhibiting exceptional adhesion on polyamide substrates. Over time, various methods have been developed to improve the bonding of these substrates and in some cases specific adhesives have been developed, which however do not fully meet expectations. In fact, in some cases a pretreatment of the surface to be bonded is required, with significant disadvantages in terms of times and costs, while the use of suitable adhesives for directly bonding polyamide surfaces does not lead to exceptional performance. Not even if thermally activated adhesives are used. The technology claimed in the present invention mainly concerns the use of an acid in aqueous solution and the balancing of the polymerization speed of the resulting adhesive. In this way, double or triple adhesions have been achieved compared to those obtained with traditional technologies.

## Description

### BACKGROUND OF THE INVENTION

The present invention relates to synthetic adhesive compositions exhibiting improved adhesion on polyamide substrates.

The field of the invention is that of synthetic adhesives such as acrylic-, methacrylic-, vinyl-, epoxy- and urethane-based adhesives and the like, used generally, but not exclusively, in the manufacturing industry for bonding surfaces of various kinds.

In particular, the esters of acrylic, methacrylic or vinyl acid are an important class of molecules used in the formulation of one- or two-component structural adhesives. These adhesives are known for their rapid polymerization even at low temperatures and their ability to bond a very wide range of substrates such as metals, rubbers, polymers in general and others.

It is known that the polymerization of acrylic, methacrylic or vinyl molecules takes place via a radical chain polymerization reaction which can be triggered by various factors, such as electromagnetic radiation, the presence of peroxides on metal surfaces and the temperature. Furthermore, acrylic, methacrylic and urethane adhesives have a good affinity with many polymeric materials on the market.

However, there are some plastic materials on the market, such as polyamide polymers or nylon, whose constitutive structure makes it difficult to obtain optimal adhesion. For this reason, part of the patent literature and technological research is dedicated to improving the performance of such synthetic adhesives on polyamide substrates.

Polyamide plastics, also known as nylon, are thermoplastic semi-crystalline polymers used where good mechanical characteristics, good resistance to temperature and to solvents, etc. are required. Unfortunately, in many cases this class of polymers is difficult to bond, probably due to the presence of hydrophobic chains between points where there are strong interactions with hydrogen and due to areas with high crystallinity.

Over time, various methods have been developed to improve the bonding of these substrates and in some cases specific adhesives have been developed, which however do not fully meet expectations.

In the first case, the surface of the substrate is treated with physical techniques such as corona discharge, plasma, flaming and the like, so as to generate a highly reactive "gas" near the surface which attacks the surface and makes it easier to bond. Thus, for example, the previously mentioned physical methods which make use of atmospheric oxygen oxidize the organic surfaces which are thus more easily wettable and therefore bondable.

These techniques have at least two negative aspects, namely: durability because, once the surface has been treated, it must be bonded almost immediately; and the fact that the described operation (for example a corona treatment) complicates the industrial application, since it requires time and investment.

The second approach is to use a suitable adhesive to bond the polyamide surfaces directly, i.e. without pre-treatment. However, the adhesions obtained are at an insufficient level for industrial applications. In particular, Michael A. Kropp and Zachary J. Thompson in their patent US 2015/0038630 A1, describe an acrylic composition with good adhesion between metal and plastics through both the use of specific tougheners and adhesion promoters based on phosphate methacrylates, obtaining results that are not completely satisfactory, however.

Publication EP 0 251 513 A2 describes an adhesive composition consisting of acrylic monomers with improved adhesion on difficult plastic substrates, including polyamide substrates. The adhesive used in this known composition consists of acrylic monomers, sulfur-chlorinated components/polymers, strong organic acids and polymerization catalysts.

### SUMMARY OF THE INVENTION

The main object of the present invention is to provide new synthetic adhesive compositions, particularly acrylic, methacrylic, vinyl, epoxy and similar adhesives, capable of offering improved adhesion on polyamide substrates or nylon, without requiring any preventive treatment of the surfaces to be bonded.

This and other objects are accomplished through the compositions in claim 1. Preferred embodiments of the invention will be apparent from the remaining claims.

Unlike the state of the art of synthetic adhesives, the compositions based on the technology of the invention, as illustrated below, offer the advantage of exceptional adhesion on polyamide substrates, without the need for any pretreatment, such as preheating, etc., of the surfaces to be bonded.

These and other objects, advantages and characteristics will be apparent from the following description of some preferred embodiments of the compositions according to the invention, provided only by way of a non-limiting example.

### DETAILED DESCRIPTION OF THE PREFERRED EMBODIMENTS

The synthetic adhesives of the invention are radical or cationic polymerization adhesives, such as acrylic or methacrylic monomers with at least one acrylic or methacrylic acid ester, and/or epoxy resins and/or polyurethanes and the like, in the presence of a strong acid according to the Bronsted-Lowry theory or Lewis acid, preferably inorganic, in aqueous solution.

In particular, according to the invention, a mixture of 20 to 86% by weight of a strong inorganic acid, such as sulfuric acid, hydrochloric acid, perchloric acid and the like, is prepared in water, which is in turn added to the synthetic adhesive.

The compositions of the invention are characterized in that they comprise at least one acrylic or methacrylic acid ester, having an acrylic and/or methacrylic group that can be polymerized by a radical mechanism, or at least one vinyl ether with one or more vinyl functionalities capable of both radical and cationic polymerization, or at least one epoxy monomer with one or more functionalities capable of cationic polymerization.

The compositions of the invention are characterized in particular in that said acrylic or methacrylic ester is present in an amount ranging from 0.1% to 99% by weight, preferably between 0.1% and 80%, with the most preferred value between 10% and 70% with respect to the total weight of the composition. Or these compositions comprise at least one vinyl ether in an amount ranging from 0.1 % to 90% by weight, or a monomer with an epoxy group present in an amount ranging from 0.1% to 90%.

The compositions of the invention contain a strong acid solution in an amount ranging from 0.1% to 90% by weight, preferably between 0.1% and 20%, with the most preferred value between 1% and 8% with respect to the total weight of the composition.

Examples of suitable methacrylic esters are monomers such as IBOA (isobornyl acrylate) or IBOMA (isobornyl methacrylate), lauryl methacrylate, polyethylene glycol dimethacrylate and acrylate or methacrylate oligomers such as polymers with a urethane, ether, etc. backbone, characterized by possessing one or more acrylic or methacrylic functionalities which are therefore capable of radical polymerization.

The compositions of the invention can comprise vinyl monomers, characterized by possessing at least one vinyl group capable of radical or cationic polymerization. Examples of vinyl monomers are 1,4-cyclohexanedimethanol divinyl ether, TriEthylene glycol divinyl ether and the like.

The compositions of the invention can comprise epoxy resins such as cycloaliphatic resins, characterized by possessing at least one cationically polymerizable oxirane ring. Examples of epoxy or oxirane resins are 3,4-epoxycyclohexylmethyl 3,4-epoxycyclohexane carboxylate and 3-ethyloxetane-3-methanol.

The strong inorganic acids described above can be the acids according to the Bronsted-Lowry theory or according to the Lewis theory, also soluble in water, alone or in combination with each other. Examples of inorganic acids in aqueous solution suitable for the invention are hydrochloric acid, sulfuric acid, phosphoric acid and their derivatives. Examples of organic acids in aqueous solution suitable for the invention are trifluoromethanesulfonic acid and derivatives.

The deposition of a mixture of said adhesive and strong acid in aqueous solution of the invention on the surface of a polyamide material, for example in use as a primer, has been shown to provide exceptional adhesion, presumably due to a co-solvent effect of the acid itself. In fact, it is hypothesized that the acid and water tend to penetrate inside the material, intercalating and weakening the hydrogen bonds between the polyamide chains. In this way the polyamide swells, the chains have greater degrees of freedom, the polarity of the medium is increased and the penetration of the acrylic or methacrylic monomers present is favored.

To initiate the polymerization process of the acrylic, methacrylic or vinyl group, the compositions of the invention include radical initiators, such as peroxides, hydroperoxides, diazo compounds, phosphine oxides, ketones, thioxanthones and the like, in particular present in quantities from about 0.1 to about 10% by weight with respect to the total weight of the composition. Other non-limiting examples of radical initiators are those that can be activated by UV in a percentage between 0.1% and 10% by weight, such as TPO (diphenyl(2,4,6 trimethylbenzoyl)phosphine oxide), BAPO (phenylbis(2,4,6 trimethylbenzoyl) phosphine oxide). Examples of radical initiators suitable for the purposes of the invention are also cumene hydroperoxide, tert-Butyl hydroperoxide and tert-Amyl hydroperoxide.

The compositions of the invention are characterized in that they comprise from 50 to 98% by weight of synthetic adhesive and from 0.1 to 50% by weight of aqueous solution of at least one strong acid with respect to the total weight of the composition.

Preferably, activators are also present to trigger the radical polymerization reaction, for example metal-organic complexes or tertiary amines, in quantities ranging from 0.1% to 10% by weight, preferably from 0.1% to 5%, even more preferably from about 0.5% to about 2% based on the total weight of the composition. Preferred examples of radical activators are copper acetate, copper naphthenate, copper ethylhexanoate and pyridine derivatives.

Using the mechanism of action of the invention it results that, in order for the process of weakening/breaking the hydrogen bonds of the polyamide chains to take place, the polymerization must not take place too quickly. In fact, too fast a reaction could compromise the penetration of the acid mixture into the polyamide material, while too slow a radical polymerization would not lead to the desired mechanical strength.

For this purpose, the compositions of the invention include controlled quantities of radical inhibitors. Preferred for the invention are the inhibitors selected from quinones, hydroquinones, substituted phenols, butylhydroxytoluene, hydroquinone monomethyl ether, used in amounts ranging from 0.1% to 10% by weight, preferably between 0.1% and 5%, even more preferably between 0.5% and 2% with respect to the total weight of the composition.

The compositions of the invention are therefore mixtures of a synthetic adhesive with aqueous solutions of one or more strong inorganic acids. Furthermore, particularly in the case of acrylic adhesives, a radical polymerization initiator, a polymerization inhibitor and an organometallic activator are also present. The compositions of the invention can also comprise monomers capable of cationic polymerization thanks to the activation of the acid itself or in admixture with standard cation initiators such as trifluoroborate in aqueous solution. In addition to triggering the reaction, this acid weakens the hydrogen bonds of the polyamide chain, favoring its adhesion. In this case the amount of strong acid must be more than that required for the polymerization reaction of the synthetic adhesive alone.

Preferably, the compositions of the invention also comprise additives such as toughening and/or flexibilizing elastomers, rheology modifiers.

The compositions of the invention will be described below with reference to the following examples of synthetic adhesive compositions of the invention prepared by mixing in an inert atmosphere, given for descriptive purposes only and with no limiting purpose.

### ACRYLIC-BASED ADHESIVE COMPOSITION (two-component)

### Legend:

IBOMA: isobornyl methacrylate (acrylic component);
BHT: butylated hydroxytoluene (inhibitor);
HEMA: hydroxyethyl methacrylate (acrylic component);
APH: acetylphenylhydrazine (catalyst);
Urethane Methacrylate: oligomer obtained from the reaction between an excess of isocyanate and a polyol which is subsequently made to react with HEMA so as to transform the isocyanate groups into reactive acrylic groups towards radical polymerization (acrylic component);
Hydrochloric acid: strong acid (surface adhesion activator);
Copper acetate: radical reaction activator;
Bisphenol A ethoxylate methacrylate (acrylic component);
Cumyl hydroperoxide (radical initiator).

The mixing ratio for the acrylic adhesive and the activator is 1:2 while the hydrochloric acid solution is 3.3% on the total of the formulation.

| Component | Activator composition (First component) (% by weight) | |
|---|---|---|
| | 1 (prior art) | 2 (invention) |
| IBOMA | 63 | 58 |
| Urethane methacrylate | 20 | 20 |
| BHT | 0.5 | 0.5 |
| Hydrochloric acid 36% by weight in water | - | 5 |
| HEMA | 16 | 16 |
| Copper acetate | 0.5 | 0.5 |

| | Adhesive composition (second component) (% by weight) |
|---|---|
| BisphenolAEthoxylate Methacrylate: | 96.8 |
| Cumyl hydroperoxide | 2 |
| BHT | 0.2 |
| APH | 1.0 |

### ACRYLIC-BASED ADHESIVE COMPOSITION WITH PHOTOINITIATOR (one-component)

An example of a composition of the invention is given below, with radical photoinitiator TPO: diphenyl-2,4,6 trimethylbenzoyl-phosphine oxide.

| | Adhesive composition (% by weight) |
|---|---|
| Com ponent | 3 (invention) |
| IBOMA | 60 |
| Urethane methacrylate | 27 |
| Hydrochloric acid 36% in water | 5 |
| TPO | 3 |
| HEMA | 5 |

The adhesion of each of the formulations on polyamide substrates was determined by means of a test commonly referred to as the Lap Shear Test performed with a universal dynamometer on a specimen regulated by ASTM D1002. The characteristic measured is the specific shear strength (LSS or Lap Shear Strength in the technical literature).

The composition 2 of the previous example was compared with the example 1 of the prior art. Tests were performed on bonded joints prepared as follows.

The 25 mm wide and 3 mm thick nylon-6 specimens were cleaned with a cloth soaked in isopropyl alcohol. Specimens of a 25 mm wide and 10 mm thick nylon-glass fiber composite (30%) were cleaned with a cloth soaked in isopropyl alcohol. The adhesive mixtures were applied to one of the adherents which was surmounted on the other using a suitable template necessary to maintain a constant overlap of 12.5 mm. The joint was clamped using suitable pliers and left to rest at room temperature for 24 hours. The specimens were subjected to tensile tests using a dynamometer with a tensile speed of approx. 7 mm/min.

The adhesion values obtained are shown in the following table:

| | Composition 1 (prior art) | Composition 2 (invention) |
|---|---|---|
| LSS (N/mm2) at 25°C - nylon | 1.5 | 9 |
| LSS (N/mm2) at 25°C - 30% glass-filled nylon | 3 | 15 |
| Failure type | Adhesive failure | Substrate failure |

The table shows that the LSS values obtained on nylon with composition 2 of the invention are considerably higher than the standard represented by composition 1.

### ADHESIVE COMPOSITION BASED ON VINYL ETHER

The mixing ratio for the adhesive and the activator is 10:1 to be applied "bead on bead" while the amount of acid on the total composition is 4.5%.

| | Adhesive composition (% by weight) | Adhesive composition (% by weight) |
|---|---|---|
| 1,4-cyclohexanedimethanol divinyl ether | 100 | 100 |

| | Activator composition (% by weight) | Activator composition (% by weight) |
|---|---|---|
| Component | 4 (prior art) | 5 (invention) |
| Trifluoro borate hydrate | 100 | 50 |
| Hydrochloric acid 36% in water | | 50 |

### CYCLOALIPHATIC EPOXY-BASED ADHESIVE COMPOSITION

The mixing ratio for the adhesive and the activator is 10:1 to be applied "bead on bead" while the amount of acid on the total composition is 4.5%.

| | Adhesive composition (% by weight) | Adhesive composition (% by weight) |
|---|---|---|
| 3,4-epoxycyclohexylmethyl 3,4-epoxycyclohexane carboxylate | 90 | 90 |
| 3-ethyloxethane-3-methanol | 10 | 10 |

| | Activator composition (% by weight) | Activator composition (% by weight) |
|---|---|---|
| Component | 6 (prior art) | 7 (invention) |
| Trifluoro borate hydrate | 100 | 50 |
| Hydrochloric acid 36% in water | | 50 |

The compositions 5 and 7 of the previous example were compared with the examples 4 and 6 of the prior art. Tests were performed on bonded joints prepared as follows.

The 25 mm wide and 3 mm thick nylon-6 specimens were cleaned with a cloth soaked in isopropyl alcohol. The adhesive and the activator were applied separately to the polyamide adherent: the adhesive was applied to the surface of an adherent while the activator was applied to the adherent. The usage ratio is: 10 parts adhesive and 1 part activator. The parts were then overlapped so as to bring the adhesive and activator into contact and for the polymerization to occur. A template with a constant 12.5 mm overlap was used for the coupling of the parts. The joint was clamped using suitable pliers and left to rest at room temperature for 24 hours. The specimens were subjected to tensile tests using a dynamometer with a tensile speed of approx. 7 mm/min.

The adhesion values obtained are shown in the following table:

| | Composition 4 (prior art) | Composition 5 (invention) | Composition 6 (prior art) | Composition 7 (invention) |
|---|---|---|---|---|
| LSS (N/mm2) at 25 °C - nylon 6 | 1 | 5 | 1.5 | 5 |
| Failure type | Adhesive failure | Cohesive failure | Adhesive failure | Cohesive failure |

According to a variant of the invention, it is possible to generate the strong acid in situ, or directly by mixing the adhesive part with the activator part, such as thionyl chloride and water.

To demonstrate the better effectiveness of the adhesive composition of the invention, which makes use of at least one strong inorganic acid in aqueous solution (hydrochloric acid in water), compared to the compositions described in EP 0 251 513 A1, in which organic compounds (maleic acid) are used instead, the following comparative examples were made on an acrylic adhesive formulation.

The ASTM D1002 standard was followed to evaluate the adhesion, using nylon 6 substrates cleaned with isopropyl alcohol and not sanded. The adhesive was left to polymerize for 24 hours at room temperature and then tested on a dynamometer. The preparation procedure is described on the previous page 9.

Adhesion is evaluated as maximum resistance to an applied shear load. This shear load has been identified by abbreviation in the following tables as Lap Shear Strength - LSS.
A0 reference values
A1 and A2 inorganic acid vs organic acid based on the amounts of the above examples of the invention
A3, A4, A5 inorganic acid vs organic acid based on the amounts of acid described in examples 68-73 of EP 0 251 513.

**TABLE 1**

| | Basic ref | Strong inorganic acid | Organic acid | Strong inorganic acid | Organic acid | Organic acid + H2O |
|---|---|---|---|---|---|---|
| | A0 | A1 | A2 | A3 | A4 | A5 |
| Name | % | % | % | % | % | % |
| IBOMA | 63 | 63 | 63 | 63 | 63 | 63 |
| Urethane methacrylate | 20 | 20 | 20 | 20 | 20 | 20 |
| HEMA | 15.5 | 15.5 | 15.5 | 15.5 | 15.5 | 15.5 |
| 36% hydrochloric acid in H2O | | 5 | | 18 | | |
| Maleic acid | | | 2.5 | | 6.7 | 6.7 |
| Copper acetate | 0.5 | 0.5 | 0.5 | 0.5 | 0.5 | 0.5 |
| H2O | | | | | | 3 |
| | 100.2 | 104 | 101.5 | 117 | 105.6 | 108.6 |
| | | | | | | |
| | Activator 1 | Activator 1 | Activator 1 | Activator 1 | Activator 1 | Activator 1 |
| Name | % | % | % | % | % | % |
| BisphenolA Ethoxylate Methacrylate | 96.800 | 96.800 | 96.800 | 96.800 | 96.800 | 96.800 |
| Acetylphenyl hydrazine | 1.000 | 1.000 | 1.000 | 1.000 | 1.000 | 1.000 |
| BHT | 0.2 | 0.2 | 0.2 | 0.2 | 0.2 | 0.2 |
| Cumyl hydroperoxide | 2.000 | 2.000 | 2.000 | 2.000 | 2.000 | 2.000 |
| | 100 | 100 | 100 | 100 | 100 | 100 |
| | | | | | | |
| Mix ratio by volume A:B | 2:1 | 2:1 | 2:1 | 2:1 | 2:1 | 2:1 |
| LSS - nylon 6 - 24h at RT | 1 | 8* | 1 | 7* | 1.5 | 1.5 |

| | | | | | | |
|---|---|---|---|---|---|---|
| *substrate failure. | | | | | | |

In all the other cases, the failure is adhesive.

The mixing of the parts was done by volume from two-component cartridges, using a static mixer and a manual gun.

As can be seen from Table 1, the adhesion, evaluated as LSS between two polyamide substrates, shows that the organic acid alone of the prior art compositions is not sufficient to significantly improve the adhesion on these substrates (see for example A0 - A2 - A5). On the contrary, when using the strong inorganic acid in aqueous solution of the invention (examples A1 - A3), the LSS values are high enough to cause polyamide substrate failure under the applied stress.

To highlight the difference between the effects on a polyamide surface of the best organic acid described by the patent EP 0 251 513 compared to the composition of the invention with strong inorganic acid in aqueous solution, mixtures of the respective acids were made with the hydroxyethyl methacrylate (HEMA) acrylic monomer which simulates the acrylic formulation of the adhesive, thus obtaining the two solutions shown in table 2.

**TABLE 2**

| | Sol. Organic Ac. C | Sol. Inorganic Ac. D |
|---|---|---|
| | % | % |
| HEMA | 90.3 | 82 |
| Maleic acid | 6.7 | |
| H2O | 3 | |
| 36% hydrochloric acid in H2O | | 18 |
| Total | 100 | 100 |

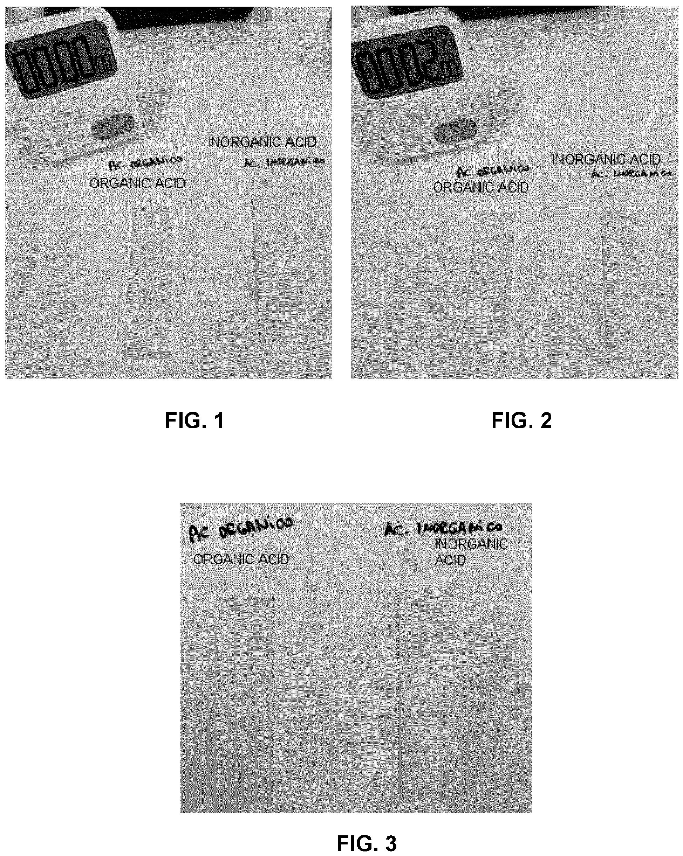

A few drops of these solutions were placed on the surface of the nylon, left to "act" for two minutes and subsequently removed. The surface effect is evident in Figures 1-3.

The surface phenomenon appearing is due to the swelling of the polymer. This effect occurs when chemical species are able to penetrate the structure of a polymeric material. Because these molecules fit between the chains of the polymer, they make it easier to "bond". In fact, an adhesive of suitable polarity, such as the acrylic formulation of the invention, can itself penetrate and polymerize. With no limiting purpose, the strong acid is assumed to intercalate between the interchain hydrogen bonds. The greater ease of swelling of the polyamide polymer in the presence of the strong aqueous inorganic acids of the adhesive composition of the invention, with respect to the organic acids of the prior art, is demonstrated by immersion and absorption tests. In fact, by immersing a specimen of nylon 6 in the respective solutions described in Table 2, a decrease in weight is observed due to the solubilization of the polymer as reported in Table 3 below.

**TABLE 3**

| Solutions | Δ% in weight 3 hours of immersion at RT | Δ% in weight 72 hours of immersion at RT |
|---|---|---|
| Organic ac. sol. C | +0.13% | 0.37% |
| Inorganic ac. sol. D | -1% | -23% |

Comparative tests were also carried out using the formulations described in the patent EP 0 251 513, examples 47-53, using an organic acid and a strong inorganic acid.

In the three formulations A6-A8 the amount of acid is the same (Table 4).

The preparation of the specimens on which the adhesion will be tested is described in the patent EP 0 251 513, lines 8-13 of page 18, with the only difference that a spacer is not used because it is not relevant for the purposes of the test. The specimens are then closed and tested after 24h at RT (ASTM D1002).

TS 340 is a sulfur-chlorinated polyethylene, equivalent to the Hypalon 30 described in patent EP 0 251 513, no longer in production and replaced by Tosoh's TS340.

**TABLE 4**

| | Example 47 | Example 53 | PB solution |
|---|---|---|---|
| | A6 | A7 | A8 |
| | % | % | % |
| TS340 40% in MMA | 89.000 | 89.000 | 89.000 |
| BHT | 0.250 | 0.250 | 0.250 |
| Cumyl hydroperoxide | 0.500 | 0.500 | 0.500 |
| 37% maleic acid sol. in MMA | 17.870 | 17.870 | |
| H2O | | 3.000 | |
| VANAX 808 | | | 19 |
| | 107.6 | 110.6 | 112.0 |
| | | | |

| | Activator 2 | Activator 2 | Activator 3 |
|---|---|---|---|
| | % | % | % |
| acetone | 81.000 | 81.000 | 81.000 |
| VANAX 808 | 19.000 | 19.000 | |
| Copper acetylacetonate | 0.050 | 0.050 | 0.050 |
| 36% hydrochloric acid in water | | | 12 |
| | 100.1 | 100.1 | 100.1 |
| | | | |
| | | | |
| LSS - nylon 6 - 24h at RT | 1.5 | 2 | 5 |

This table confirms the better efficacy of the adhesive composition of the invention, in terms of adhesiveness on polyamide substrates, with respect to the analogous compositions of the prior art which make use of organic acids.

## Claims

1. Adhesive composition, particularly for polyamide substrates, **characterized in that** it consists of a mixture comprising:
(a) a synthetic radical or cationic polymerization adhesive;
(b) an aqueous solution of at least one strong inorganic acid;
(c) at least one radical initiator or cationic initiator of the polymerization reaction of said synthetic adhesive.

2. Composition according to claim 1, **characterized in that** it comprises from 50% to 98% by weight of synthetic adhesive (a), from 0.1% to 50% by weight of acid aqueous solution (b) and from 0.1% to 10% by weight of radical or cationic initiator (c) with respect to the total weight of said composition.

3. Composition according to claim 1, **characterized in that** said synthetic adhesive is a radical or cationic polymerization adhesive, in which a radical or cationic activator and an inhibitor of said polymerization reaction are also present.

4. Composition according to claim 3, **characterized in that** it comprises either at least one acrylic or methacrylic acid ester, having an acrylic and/or methacrylic group that can be polymerized by a radical mechanism, or at least one vinyl ether with one or more vinyl functionalities capable of both radical and cationic polymerization, or at least one epoxy monomer with one or more functionalities capable of cationic polymerization.

5. Composition according to claim 1, **characterized in that** said aqueous solution (b) comprises from 20 to 86% by weight of strong inorganic acid according to the Bronsted-Lowry theory with respect to the weight of said solution.

6. Composition according to claim 5, **characterized in that** said strong inorganic acid consists of oxyacids such as sulfuric acid, hydrochloric acid or perchloric acid.

7. Composition according to claim 4, **characterized in that** said acrylic or methacrylic ester is present in an amount ranging from 0.1% to 99% by weight with respect to the total weight of the composition.

8. Composition according to claim 4, **characterized in that** said vinyl ether is present in an amount ranging from 0.1% to 90% by weight with respect to the total weight of the composition.

9. Composition according to claim 4, **characterized in that** said monomer with an epoxy group is present in an amount ranging from 0.1% to 90% by weight with respect to the total weight of said composition.

10. Composition according to claim 1, **characterized in that** it comprises from 0.1% to 90% by weight of said strong inorganic acid with respect to the total weight of synthetic adhesive (a).

11. Composition according to claim 10, **characterized in that** said radical initiator is present in an amount ranging from 0.1% to 10% by weight with respect to the total weight of said composition.

12. Composition according to claim 1, **characterized in that** it comprises from 0.1% to 10% by weight of said radical initiator with respect to the total weight of the composition.

13. Composition according to claim 3, **characterized in that** said radical inhibitor is present in an amount ranging from 0.1% to 10% by weight with respect to the total weight of said composition.

14. Composition according to one or more of the preceding claims, **characterized in that** it also comprises additives such as toughening and/or flexibilizing elastomers, rheology modifiers.

15. Composition according to claim 10, **characterized in that** said strong inorganic acid can be generated in situ, or directly by mixing said synthetic adhesive with said activator.
